(19) Europäisches Patentamt
European Patent Office
Office européen des brevets

(11) **EP 4 761 264 A1**

(12) **EUROPEAN PATENT APPLICATION**

(43) Date of publication:
**17.06.2026 Bulletin 2026/25**

(21) Application number: **24219275.5**

(22) Date of filing: **12.12.2024**

(51) International Patent Classification (IPC):
**H04N 23/68** (2023.01)    **G02B 27/64** (2006.01)

(52) Cooperative Patent Classification (CPC):
**G02B 27/646; H04N 23/6812; H04N 23/685;
H04N 23/687**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Axis AB**
**223 69 Lund (SE)**

(72) Inventors:
• **Nilsson, Dennis**
  **223 69 Lund (SE)**
• **Jonsson, Peter**
  **223 69 Lund (SE)**

(74) Representative: **AWA Sweden AB**
**Matrosgatan 1**
**Box 5117**
**200 71 Malmö (SE)**

Remarks:
Amended claims in accordance with Rule 137(2)
EPC.

(54) **METHOD FOR CONTROLLING AN OIS SYSTEM**

(57)    In an aspect there is provided a method for controlling an OIS system of an image capturing device, the method comprising:

obtaining a first and a second time-series of samples derived from a motion signal of a motion sensor of the image capturing device, wherein the motion signal indicates a motion of the image capturing device, and wherein the first time-series spans a longer time period of the motion signal than the second time-series;

determining a current dominant frequency for the motion signal based on a frequency analysis of the first time-series; and

determining a setpoint for the OIS system by:

fitting to the second time-series a model function based on a sine and/or cosine function and the current dominant frequency,

extrapolating the fitted model function past a last sample of the second time-series to predict a successive sample, and

determining the setpoint based on the predicted successive sample.

*Fig. 3*

EP 4 761 264 A1

**Description**

TECHNICAL FIELD

The present invention generally relates to a method for controlling an optical image stabilization (OIS) system, an image capturing device and a computer program product for implementing such a method.

BACKGROUND

Optical image stabilization (OIS) is used in cameras to reduce the impact of camera movement, notably vibrations, on captured image frames. For example, camera movement may result in a blurred image frame and/or, when capturing video, result in an unstable video (i.e., "frame-to-frame jitter") due to camera motion between video frames.
Where the camera is mounted to a supporting structure, such as a wall, a ceiling, a pole or other camera support (as often is the case in video surveillance applications) the camera vibrations may be caused by shaking of the camera and/or the supporting structure due to collision with another object, or exposure to other external forces such as wind. Where the camera is a hand-held, the camera vibrations may be due to an unsteady hand of the camera user.
The basic principle behind lens-based OIS is to actuate a movable lens element inside the camera block to compensate for the camera vibrations. The OIS system may, based on sensed motion of the camera, move the movable lens element to compensate for the vibrational motion to keep the image steady on the image sensor of the camera. A corresponding approach may be applied to sensor-based OIS wherein, instead of moving a movable lens element, the OIS system may actuate the image sensor based on the sensed motion. This approach is sometimes referred to as "sensor-based image stabilization" (SIS) and is in the present disclosure considered as a type of OIS.
A common feature of the above-mentioned OIS approaches is that they involve actuating a physical element (e.g., lens or sensor) with a certain inertia. Hence, actuating the movable element will take some time and therefore the compensation will typically lag the movement to some degree. The amount of lag is dependent on the specific parameters of the OIS system, (e.g., responsiveness of the OIS system and actuators, the inertia of the movable element, a frequency of the vibration, etc.). As an illustrative non-limiting example, a typical lag for a state-of-the-art OIS system may lie in a range of about 5-10 ms. This may translate to some post-OIS residual movement of the image on the image sensor (which also may be termed "OIS error"), resulting in blurring of and/or movement between the image frame(s). The amount of residual movement tends to be more pronounced for higher frequency vibrations (e.g., above 5 Hz).

SUMMARY

In view of the above, it is an object of the present invention to provide improved approaches for controlling an optical image stabilization (OIS) system enabling reduced residual movement, and thus a more effective OIS system. Further and alternative objects may be appreciated from the following.
According to a first aspect of the present invention, there is provided a method for controlling an OIS system of an image capturing device, the method comprising:

obtaining a first and a second time-series of samples derived from a motion signal of a motion sensor of the image capturing device, wherein the motion signal indicates a motion of the image capturing device, and wherein the first time-series spans a longer time period of the motion signal than the second time-series;
determining a current dominant frequency for the motion signal based on a frequency analysis of the first time-series; and
determining a setpoint for the OIS system by:

fitting to the second time-series a model function based on a sine and/or cosine function and the current dominant frequency,
extrapolating the fitted model function past a last sample of the second time-series to predict a successive sample, and
determining the setpoint based on the predicted successive sample.

The setpoint for controlling a position of a movable element of the OIS system may thereby be determined from a successive sample predicted based on the first and second time-series. The OIS system may thereby be controlled to compensate (i.e., by actuating the movable element based on the setpoint) for a successive (i.e., next or future) motion of the image capturing device. The OIS system may thus be controlled to compensate for the successive motion in advance, whereby a lag between the compensation carried out by the OIS system and the actual motion of the image capturing device (e.g., camera) can be reduced. This enables an OIS error to be reduced.

Both where the image capturing device is mounted to a supporting structure (e.g., a wall, a ceiling, etc.) and in a hand-held application, shaking of the image capturing device tends to manifest as a vibration with one or more dominant frequencies. The dominant frequencies tend to correlate with the natural frequency of the combined system formed by the image capturing device and the supporting structure, or the image capturing device and the user. Since the model function is based on a current dominant frequency, which in turn is determined from the first time-series of samples, the model function is not static but may be adapted to the dominant (e.g., natural) frequency/frequencies of the vibrational motion.

Since the first time-series spans a longer time period than the second time-series, the first time-series and the second time-series may represent a "long(er) term history" and a "short(er) term history", respectively, of the motion signal.

The first time-series / long term history may span a time period suitable for capturing long term characteristics of the motion signal. Determining the current dominant frequency based on the long term history of samples may thus enable an accurate frequency estimation.

Meanwhile, the second time-series / short term history may span a time period suitable for capturing short term characteristics of the motion signal, e.g. transient characteristics. The prediction of successive samples may thus to a lesser extent take the long term history of the motion signal into account. This may contribute to a faster and more precise prediction, with more weight given to the more recent history of the signal.

It has further been found that fitting a model function based specifically on a sine and/or cosine function, in combination with the current dominant frequency, to the second time series of data enables a precise prediction of successive samples with a relatively simple model and small computational complexity.

In some embodiments, an earliest sample of the first time-series is earlier than an earliest sample of the second time-series and a last sample of the first time-series is concurrent with or earlier than the last sample of the second time-series. Thus, the last sample of the second time-series may be an at least as recent (i.e., up-to-date) sample as the last sample of the first time-series. Having the last sample of the first time-series earlier than the last sample of the second time-series implies that successive samples may be predicted at a higher rate than the current dominant frequency. That is, a successive sample may be predicted responsive to obtaining a new current sample, without waiting for an updated determination of the current dominant frequency taking the new current sample into account. Conversely, this implies that the first time-series and the current dominant frequency need not be updated as frequently as the second time-series and the prediction of successive samples. Since the current dominant frequency is determined from the long term history of samples, and further reflects a long term characteristics of the motion signal, it is expected the current dominant frequency may vary relatively slowly over time, and hence need not be updated as frequently as the prediction of successive samples.

In some embodiments, the motion signal indicates a rotational motion. The motion signal may thus be obtained from a sensor capable of detecting a rotational motion (e.g., as an angular rate) of the image capturing device/motion sensor, such as a gyro (i.e., gyroscope). Vibrational motion of the image capturing device due to shaking tends to produce a greater variation in orientation/angle than in linear position of the image capturing device. Hence, determining the setpoint based on samples derived from a motion signal indicating rotational motion may enable an effective OIS.

In some embodiments, the motion signal indicates an angular rate and the samples are derived by integrating the motion signal. Hence, the samples may define "orientation samples" indicating an instantaneous orientation of the image capturing device. The prediction of the successive sample (successive orientation sample) may thus be performed in an angular domain.

In some embodiments, the motion sensor comprises a gyro. A gyro may provide a motion signal indicating a rotational motion with a relatively low noise.

In some embodiments, the samples of the first time-series are obtained at a first sampling rate and the samples of the second time-series are obtained at a second sampling rate. The first and the second sampling rates may be equal or different sampling rates.

In some embodiments, the first sampling rate of the first time-series is lower than the second sampling rate of the first time-series. Thereby, the prediction and setpoint may be based on a more frequently updated set of samples than the current dominant frequency. This may further contribute to the speed and precision of the prediction. This may further allow successive samples to be predicted at a higher rate than the current dominant frequency is determined/updated. Moreover, since the current dominant frequency reflects a long term characteristics of the motion signal, it may be reliably determined also from a less frequently updated set of samples.

In some embodiments, fitting the model function to the second time-series comprises determining a least squares fit of the model function to the second time-series using orthogonal-triangular matrix decomposition, wherein determining the least squares fit comprises: selecting an orthogonal and a triangular matrix pair from a plurality of orthogonal and triangular matrix pairs, each pair pre-computed for a model function based on a sine and/or cosine function and a respective frequency, wherein the selected orthogonal and triangular matrix pair is the pair among the plurality of orthogonal and triangular matrix pairs computed for the frequency closest to the determined current dominant frequency.

Thus, instead of performing a least squares fitting in real-time upon each prediction of a successive sample, the method may select a pair of orthogonal and triangular matrices from among a plurality of pre-computed matrix pairs, each pre-computed for a respective frequency.

In some embodiments, the matrix decomposition is QR, RQ, QL, or LQ decomposition.

In some embodiments, the method further comprises:

sequentially updating the second time-series with new samples derived from the motion signal; and
sequentially determining updated setpoints for the OIS system, wherein each updated setpoint is determined by:

fitting to the last updated second time-series a model function based on a sine and/or cosine function and a current dominant frequency,
extrapolating the fitted model function past the last sample or the last updated second time-series to predict an updated successive sample, and
determining the updated setpoint based on the predicted updated successive sample.

Hence, updated setpoints for the OIS system may be sequentially determined in step with obtaining new samples.

As discussed above, a rate of updating the current dominant frequency and the prediction of successive samples may be different. Hence, upon determining each respective updated setpoint, "a current dominant frequency" on which the model function is based may be the same current dominant frequency used to determine one or more preceding updated setpoints, or an updated current dominant frequency, i.e., updated since determining the immediately preceding updated setpoint. That is, determining each updated setpoint may comprise fitting to the last updated second time-series a model function based on a sine and/or cosine function and a last (i.e., most recently) determined current dominant frequency.

In some embodiments, the method further comprises:

sequentially updating the first time-series with new samples derived from the motion signal; and
sequentially determining an updated current dominant frequency based on the last updated first time-series of samples;
wherein the respective model function used to predict each respective updated upcoming sample is based on the last updated current dominant frequency.

Hence, updated current dominant frequencies, to be used by the OIS system for determining updated setpoints, may be sequentially determined. Updated current dominant frequencies may be determined at a rate lower than or equal to the rate of updating the first time-series. Updated current domain frequencies may typically be determined at a lower rate than the rate of determining updated setpoints.

In some embodiments, the method further comprises determining a variability of a sequence of determined current dominant frequencies (i.e. determined as per the above), wherein a length of a subsequently updated second time series is based on the variability such that the length is smaller responsive to a higher variability than responsive to a lower variability.

Thereby, the model function used to subsequently determine an updated setpoint may be fitted to fewer samples responsive to a higher variability than responsive to a lower variability. Hence, when the dominant vibrational frequency in the motion signal is stable, a longer second time-series may be used to improve the reliability of the prediction. Conversely, when the dominant vibrational frequency in the motion signal is less stable, a shorter second time-series may be used to improve the reliability of the prediction.

In some embodiments, the first and second time-series are updated at a first and a second sampling rate, respectively, wherein the first sampling rate is lower than or equal to the second sampling rate. Typically, updated setpoints may be determined at a same rate as the rate of updating the second time-series, i.e. the second sampling rate.

In some embodiments, determining the current dominant frequency comprises:

based on a frequency analysis of the first time-series of samples, identifying whether the first time-series includes any frequency components having an amplitude exceeding an amplitude threshold;
in response to identifying at least one frequency component having an amplitude exceeding the amplitude threshold, setting the current dominant frequency to the frequency of the dominant frequency component among the at least one identified frequency component,
in response to not identifying any frequency component having an amplitude exceeding the amplitude threshold, setting the current dominant frequency to a predetermined default frequency.

Hence, in case no dominant frequency can be reliably detected in the first time-series of samples, the "current dominant frequency" may default to a predetermined frequency.

In some embodiments, the OIS system is configured to compensate for vibration of the image capturing device by controlling a position of a movable element of the OIS system based on the determined setpoint (each sequentially updated setpoint).

The setpoint may hence be provided as a control signal to the OIS system, wherein the OIS system may actuate the movable element according to the setpoint.

Determining the setpoint for the OIS system may comprise applying a transform to the successive sample to map the same to a setpoint representing a position of the movable element. Hence, the prediction may be performed in a first coordinate system in a domain of the motion signal (e.g., an angular domain), and be mapped to a second coordinate system for representing the position of the movable element.

According to a second aspect, there is provided an image capturing device comprising:

> a motion sensor configured to output a motion signal indicating an instantaneous motion of the image capturing device;
> an OIS system configured to compensate for motion of the image capturing device; and
> a processing device configured to perform the method of the first aspect or any embodiments thereof.

According to a third aspect, there is provided a non-transitory computer program product comprising computer program code portions configured to perform the method of the first aspect or any embodiments thereof, when executed by a processing device.

In general, any embodiment, feature, effect or advantage discussed in connection with the first aspect applies correspondingly to the second and third aspects.

BRIEF DESCRIPTION OF THE DRAWINGS

The above, as well as additional objects, aspects, embodiments, features and effects of the present disclosure, may be better understood through the following illustrative and non-limiting detailed description, with reference to the appended drawings. In the drawings like reference numerals will be used for like elements unless stated otherwise.

> Fig. 1 is a block diagram of an image capturing device according to an implementation.
> Fig. 2 is a block diagram of an image capturing device according to a further implementation.
> Fig. 3 shows in further detail a block diagram of an OIS system in accordance with an implementation.
> Fig. 4 is a flow chart of a method for controlling an OIS system.
> Fig. 5 is a flow chart showing steps of determining a setpoint for an OIS system.
> Fig. 6 is an example diagram depicting a first time-series of orientation samples.
> Fig. 7 is an example of a frequency transform domain representation of the first time-series of orientation samples of Fig. 6.
> Fig. 8 is an example diagram depicting a second time-series of orientation samples and a prediction of a successive orientation sample.
> Fig. 9 is a block diagram of a further implementation of the prediction system of Fig. 3.
> Fig. 10 is a block diagram of a further implementation of the prediction system of Fig. 3.
> Fig. 11 is a flow chart showing steps of determining a current dominant frequency.

DETAILED DESCRIPTION

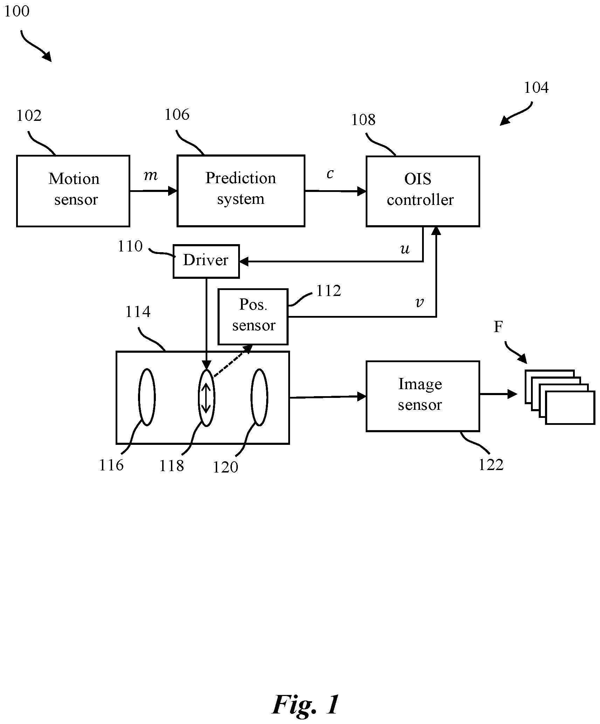

Fig. 1 is a schematic block diagram of an image capturing device 100. The image capturing device 100 may be a camera capable of capturing still images and/or video. For instance, a useful application for the image stabilization approaches of the present disclosure is an image capturing device 100 in the form of a monitoring or surveillance camera with video-capturing capability, for instance a networked surveillance camera (e.g., an Internet Protocol (IP) camera). As such, the image capturing device 100 may be adapted for a fixed installation, e.g., by being mounted to a supporting structure such as a building structure (e.g., a wall, a ceiling, a roof, a lighting pole, a mast, etc.), or other suitable structure, to monitor a scene. However, the image stabilization approaches of the present disclosure are applicable also to image capturing devices suitable for hand-held or body-worn image capture and/or for mounting on a camera tripod. For conciseness, the image capturing device 100 may in the following be referred to as camera 100, without loss of generality.

The camera 100 comprises an optical system 114 and an image sensor 122. The optical system 114 comprises a system of optical elements, such as one or more lenses 116, 118, 120. The number of optical elements shown in Fig. 1 is merely a non-limiting example and both fewer and greater number of lenses and/or other optical elements are also possible. During an image capturing operation, the camera 100 may monitor a scene by capturing, using the image sensor 122, images or frames F imaged onto the image sensor 122 by the optical system 114, thereby providing a sequence of images or frames F of the scene. In the case of a video capturing operation, the image frames F may be captured at a predetermined or variable frame rate suitable for the given monitoring application. The sequence of image frames F may in particular form image frames of a video sequence of the scene. The captured image frames may be provided to a downstream image processing pipeline to be subjected to typical image processing operations prior to transmission and/or storage, such as demosaicing, encoding, etc. The post-processing operations may each be of a type which per se are known in the art and will therefore not be further discussed herein.

As discussed above, motion of the camera 100, such as vibrational motion due to shaking of the camera 100 during an image capturing operation, may impair the quality of individual image frames, as well as of a sequence of image frames of a video. To compensate for such camera motion, the camera 100 implements optical image stabilization (OIS), as set out in the following.

The camera 100 comprises a motion sensor 102 configured to output a motion signal m. The motion signal m indicates an instantaneous motion of the motion sensor 102 and thus of the camera 100. The camera 100 comprises an OIS system 104 configured to compensate for motion of the camera 100 based on the motion signal m. The OIS system 104 comprises a prediction system 106, an OIS controller 108, a driver 110 and a movable element. In the illustrated example, the OIS system 104 is configured for lens-based OIS wherein the movable element is a movable optical element of the optical system 114, here exemplified by the lens 118 being a movable lens. As may be appreciated, the movable element may however also be formed by a group of movable lenses of the optical system 114, or some other optical element. The prediction system 106 is configured to determine a control signal $c$ in the form of a setpoint for the OIS controller 108. The prediction system 106 is described in further detail below. The OIS controller 108 is configured to, responsive to the control signal / setpoint c, control a position of the movable lens 118. The OIS controller 108 is configured to generate, based on the setpoint c, an actuation signal $u$ for causing the driver 110 to actuate the movable lens 118. The driver 110 is accordingly configured to actuate the movable lens 118 in accordance with the actuation signal $u$, thereby compensating for vibrational motion of the camera 100.

The driver 110 may for instance comprise one or more voice coil motor (VCM) actuators, or other suitable conventional high-speed actuators, such as comb drives or piezo actuators. The OIS system 104 may typically be capable of compensating for motion along a set of axes of compensation axes, such as two or more. The driver 110 may accordingly comprise, for each compensation axis of the OIS system 104, a respective actuator (e.g., VCM) for actuating the movable lens 118 to provide compensation along the compensation axis. The driver 110 may thus comprise actuators (e.g., VCMs) for shifting a position of the movable lens 118. The position may here refer to a location (i.e., linear position) and/or a rotation (i.e., angle/tilt of the lens/lenses). For instance, the driver 110 may comprise actuators for translating the movable lens 118 in a plane transverse to an optical axis of the optical system 114. The driver 110 may additionally or alternatively comprise actuators for rotating the movable lens 118 relative the optical axis. For instance, the OIS system 104 may be configured to move the movable lens 118 along two transverse directions in the plane. The OIS system 104 may thereby compensate for changes in pitch and yaw (defined below) of the camera 100. Also other approaches for controlling the position of the movable lens 118 are possible, such as by moving the movable lens 118 along a curved path (e.g., parabolic) to simultaneously achieve a varying location and angle of the movable lens 118. These are however merely a few examples and other approaches for actuating a movable lens or other movable optical element are also possible.

The motion sensor 102 may be any type of sensor capable of sensing motion with respect to (e.g., about or along) at least one sensing axis and output a motion signal m indicating the sensed motion for each sensing axis. The motion sensor 102 may be configured to sense motion along each of the set of compensation axes of the OIS system 104. Conveniently, the motion sensor 102 may comprise a corresponding set of sensing axes and be arranged such that the set of sensing axes align with the set of compensation axes. Thus, the motion sensor 102 may output a motion signal m indicating an instantaneous value of a respective motion component corresponding to each compensation axis.

The motion sensor 102 may be configured to sense rotational motion and/or linear motion and output a motion signal m indicating the sensed rotational and/or linear motion. The motion sensor 102 may comprise one or more gyros, one or more accelerometers, or other suitable types of inertial measurement units (IMU). The term "gyro" and "accelerometer" as used herein may refer to gyros and accelerometers having one or more sensing axes. For instance, a "single" gyro or accelerometer may on a physical / hardware level comprise a number of individual gyro or accelerometer sensors, respectively, each configured to sense motion along a respective sensing axis. Thus, a "2-axis gyro" may in practice comprise two individual gyro sensors, each configured to sense an angular rate about a respective axis (e.g., pitch and yaw). Similarly, a "3-axis accelerometer" may comprise three individual acceleration sensors, each configured to sense acceleration along a respective axis (e.g., three orthogonal axes with a fixed orientation with respect to the camera 100). Where more than one sensor and/or type of sensing technologies are used, data fusion may be used to combine the individual motion signals from each sensor into a motion signal m indicating motion for one or more sensing axes of the motion sensor 102.

For example, the motion sensor 102 may be configured to sense rotational motion as an angular rate (i.e., a rate of change of orientation / rotation) of the camera 100 / motion sensor 102 and output a corresponding motion signal m indicating the sensed angular rate. The motion sensor 102 may be configured to sense an angular rate along one or more axes, such as pitch, yaw and/or roll. Pitch may here be used to refer to a pitch angle of the optical axis (i.e., viewing direction) of the camera 100 in a vertical plane. Yaw may refer to a yaw angle of the optical axis of the camera 100 in a horizontal plane. Roll may here refer to a roll angle of the camera 100 about its optical axis. An angular rate may conveniently be sensed using a gyro. For example, a 2-axis gyro may be configured to sense angular rates of pitch and yaw angles of the camera 100. A 3-axis gyro may be configured to sense angular rates of pitch, yaw and roll angles of the camera 100. Rotational motion may also be sensed using a pair of sensing axes of a 2-axis (or greater) accelerometer. The accelerations sensed along the pair of sensing axis may be fused (e.g., integrated and converted by a trigonometric transform) into a scalar value representing an angular rate about an axis orthogonal to the pair of sensing axes. The conversion may be performed by an on-sensor computational block of the motion sensor 102, or by an off-sensor computational block of the camera 100. More generally, any sensor configuration (e.g., a gyro and/or accelerometer) allowing sensing of a rotational motion may be used. For instance, a motion sensor 102 combining a gyro and an accelerometer may use the gyro for sensing rotational motion about a first sensing axis and the accelerometer for sensing rotational motion about a second sensing axis.

As discussed above, vibrational motion tends to produce a greater variation in rotation than in linear translation camera 100. Thus, having the motion sensor 102 configured to sense at least rotational motion may allow a more sensitive sensing of vibrational movement, and thus a more effective image stabilization. The description will hence in the following mainly refer to implementations of an OIS system compensating for motion based on a motion signal indicating rotational motion (e.g., angular rate). However, the following discussion may also be applied in a corresponding manner to implementations of an OIS system compensating for motion based on a motion signal indicating linear translation along one or more axes (e.g., as a linear motion rate or linear acceleration).

Regardless of the specific implementation of the motion sensor 102, the motion sensor 102 may be configured to output the motion signal m as a digital motion signal or an analog motion signal. Where the motion sensor 102 outputs an analog motion signal m it may be sampled by an analog-to-digital converter (ADC) of the camera 100 arranged upstream the OIS system 104 and connected to an analog output of the motion sensor 102. Thus, the analog motion signal may be AD converted into a digital signal comprising (e.g., for each component) a time-series of motion samples to be provided as input to the OIS system 104. Where the motion sensor 102 outputs a digital motion signal m the motion sensor 102 may comprise an internal ADC and thus perform AD conversion of an internal analog motion signal prior to being output via a digital output of the motion sensor 102. Thus, the motion signal m may be output as a digital signal, comprising (e.g., for each component) a time-series of motion samples to be provided as input to the OIS system 104.

In the illustrated example, the prediction system 106 is shown to directly receive the motion signal m from the motion sensor 102. However, the motion signal m may typically be subjected to AD conversion (where the motion sensor 102 comprises an analog output) and/or filtering (e.g., by a filtering stage comprising integration and/or low-pass filtering of the motion signal $m$) prior to being received by the prediction system 106.

In the illustrated example, the OIS controller 108 of the OIS system 104 is implemented as a closed-loop controller. Thus, the OIS system 104 further comprises a position sensor 112 configured to sense an instantaneous position of the movable lens 118 (e.g., a linear position and/or an angle/tilt of the lens/lenses) and provide a corresponding position signal $v$ as feedback signal to the OIS controller 108. Thus, the position sensor 112 may be arranged in a feedback path of the OIS controller 108 and configured to output a feedback signal indicating a position of the movable lens 118. The position sensor 112 may for instance comprise a Hall effect sensor, e.g., one for measuring the position of the movable lens 118 along each respective compensation axis. Other examples of a position sensor 112 are however also possible, such as an optical sensor, or a giant magnetoresistance-effect (GMR-effect) sensor.

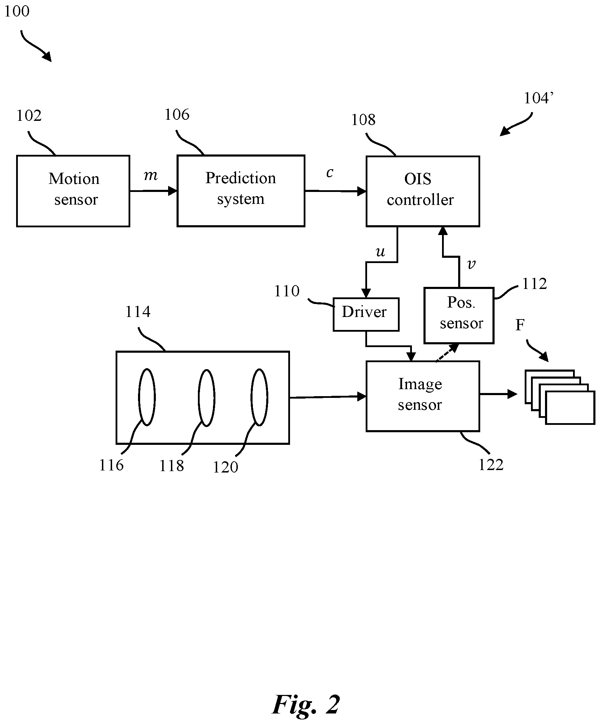

Fig. 2 is a block diagram of an alternative implementation of the image capturing device 100 comprising, instead of a lens-based OIS system 104 as in Fig. 1, a sensor-based OIS system 104'. Thus, the OIS system 104' of Fig. 2 is configured to provide OIS by controlling a position of the image sensor 122. The driver 110 of the OIS system 104' may in analogy with the driver 110 of the OIS system 104 of Fig. 1 be implemented using a set of actuators such as VCM actuators, for controlling a position of the image sensor 122 in an imaging plane and/or a tilting angle of the image senor 122. The OIS system 104' may further implement a closed-loop control and comprise a position sensor 112 (e.g., realized by Hall sensors and/or optical sensors) to provide a position signal $v$ indicating an instantaneous position of the image sensor 122 as feedback signal to the OIS controller 108. The discussion of Fig. 1 otherwise applies correspondingly to Fig. 2 and reference is thus made to the above for a discussion of correspondingly numbered elements, to avoid undue repetition.

While here for simplicity shown as alternative implementations, it is also possible to implement OIS using a combination of lens-based and sensor-based OIS. For example, a movable optical element (e.g., corresponding to the movable lens 118 of Fig. 1) and the image sensor 122 may be arranged in a common camera module, wherein OIS may be realized by controlling a position and/or angle of the camera module, i.e., as a single unit.

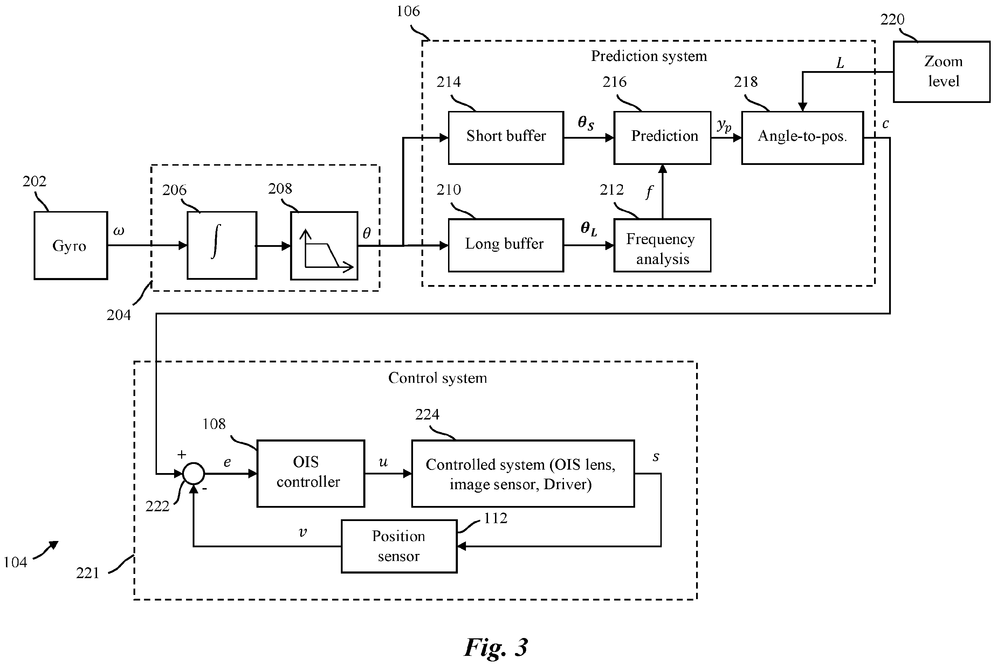

Fig. 3 shows in further detail a block diagram of an implementation of an OIS system 104. While the Fig. 3 shows a lens-based OIS system 104 corresponding to Fig. 1, the discussion applies correspondingly to image sensor-based OIS as shown in Fig. 2, as well as a combined lens- and sensor-based OIS.

Without loss of generality, the OIS system 104 of Fig. 3 will be described with reference to a motion sensor 202 implemented by a gyro. Reference will further be made to a single sensing and compensation axis, e.g. pitch or yaw. Thus, for the purpose of the following discussion, the motion sensor 202 is assumed to output a motion signal $\omega$ indicating an

angular rate of change of an orientation of the motion sensor 202 about its sensing axis (e.g., the rate of change of the pitch or yaw).

The OIS system 104 comprises a closed-loop control system 221 comprising the OIS controller 108. The OIS controller 108 may be implemented by a PID controller. In principle, a simpler implementation of the OIS controller 108 is also possible, such as a PI controller. However, given the fast response typically required for effective OIS, it is typically beneficial to use each of the P-, I- and D-components.

Block 224 represents the controlled system of the control system 221 and may with reference to Fig. 1 represent the movable lens 118 and the driver 110 actuating the movable lens 118. In case of an image sensor-based OIS like OIS system 104' of Fig. 2, the block 224 may instead represent the image sensor 122 and the driver 110 actuating the image sensor 122. The controlled parameter (i.e., the process variable) of the control system 221 is the position of the movable element and is denoted s. The position is as discussed above measured by the position sensor 110 (e.g., a Hall sensor) and provided as feedback signal $v$. The feedback signal $v$ is subtracted from the setpoint c received from the prediction system 106, to generate an error signal e for the OIS controller 108.

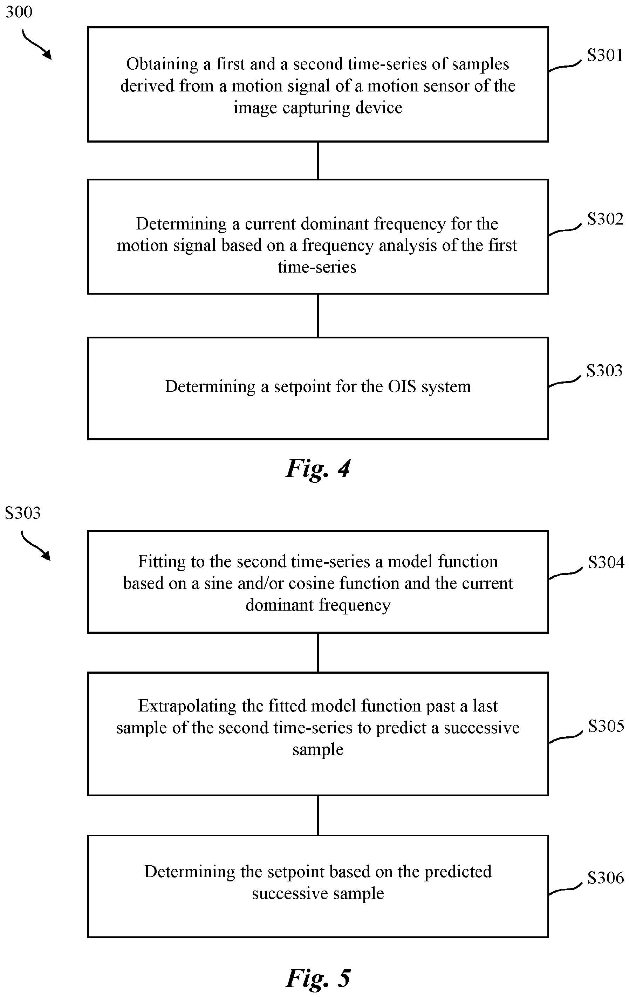

The operations performed by the prediction system 106 to generate a setpoint (i.e., at a given instant in time) are summarized in the flow charts of Figs. 4-5.

At step S301 of the method 300 of Fig. 4, the prediction system 106 obtains a first and a second time-series of samples $\theta$ derived from the motion signal $\omega$ of the motion sensor 202. The first time-series and the second time-series may in the following be denoted $\theta_L$ and $\theta_S$, respectively. The first time-series $\theta_L$ is stored in a first buffer 210 of the prediction system 106, hereinafter termed "long history buffer 210". The second time-series $\theta_S$ is stored in a second buffer 214 of the prediction system 106, hereinafter termed "short history buffer 214". If needed for ease of explanation, a motion sample $\omega$ obtained at a given time instant $t = t_i$ may in the following be denoted $\omega(t_i)$. The term $i$ is here an integer index for the given time instant such that $t_i = i * \Delta_t$, where $\Delta_t$ is the sampling interval of the motion signal / motion samples $\omega$ and $t_0$ is an arbitrary reference point in time. Correspondingly, an orientation sample derived from a motion sample $\omega(t_i)$ obtained at a given time instant $t = t_i$ may be denoted $\theta(t_i)$. Further, the first time-series and second time-series at a given time instant $t = t_i$ may be denoted $\theta_L(t_i)$ and $\theta_S(t_i)$, respectively. That is, $\theta_L(t_i)$ denotes the first time-series and $\theta_S(t_i)$ denotes the second time-series as stored in the long and short history buffers 210, 214, respectively, at a given time instant $t = t_i$. The term "sampling interval" (interchangeably "sampling period") is in the present disclosure used in the normal sense of the word to refer to the time interval or time period between sampling instants, i.e., the inverse of the sampling rate. For ease of explanation, it will in the following be assumed that the sampling rates of the first and second time-series $\theta_L$ and $\theta_S$ and the motion signal $\omega$ are equal, such that this notation may be used to refer to time instants and respective samples of each of $\theta_L$, $\theta_S$ and $\omega$. However, as further explained below, different sampling rates are also possible.

The samples $\theta$ of the first and second time-series $\theta_L$ and $\theta_S$ are according to the illustrated example derived by passing the angular rate samples of the motion signal $\omega$ through a filtering stage 204. The filtering stage 204 comprises an integrator 206 integrating the angular rate samples over time to produce a time-series of orientation samples $\theta$. The orientation samples $\theta$ may also be referred to as angular samples. To reduce sensitivity to noise in the motion signal $\omega$ the integrator 206 may be a leaky integrator. Thus, an updated orientation/angular sample $\theta(t)$ at $t = t_{i+1} = t_i + \Delta_t$ may be computed according to:

$$\theta(t_i + \Delta_t) = C * (\theta(t_i) + \omega(t_i + \Delta_t) * \Delta_t)$$

where $\Delta_t$ is the sampling interval of the motion signal $\omega$, and $C$ is a "leaky" integration amount. The integration amount C may for instance be set to a value in a range of 0.99 to 0.9999, as a non-limiting example. The specific value may be a design choice made in view of factors such as the amount of noise in the motion signal $\omega$, the desired responsiveness of the OIS system 104, etc. The filtering stage 204 may as shown further comprise a low-pass filter 208. The low-pass filter 208 is here shown as a post-processing step to the integration 206, however, low-pass filtering may alternatively, or additionally, be performed prior to the integration 206. In either case, a low-pass filter 208 may further suppress noise and thus reduce the noise sensitivity.

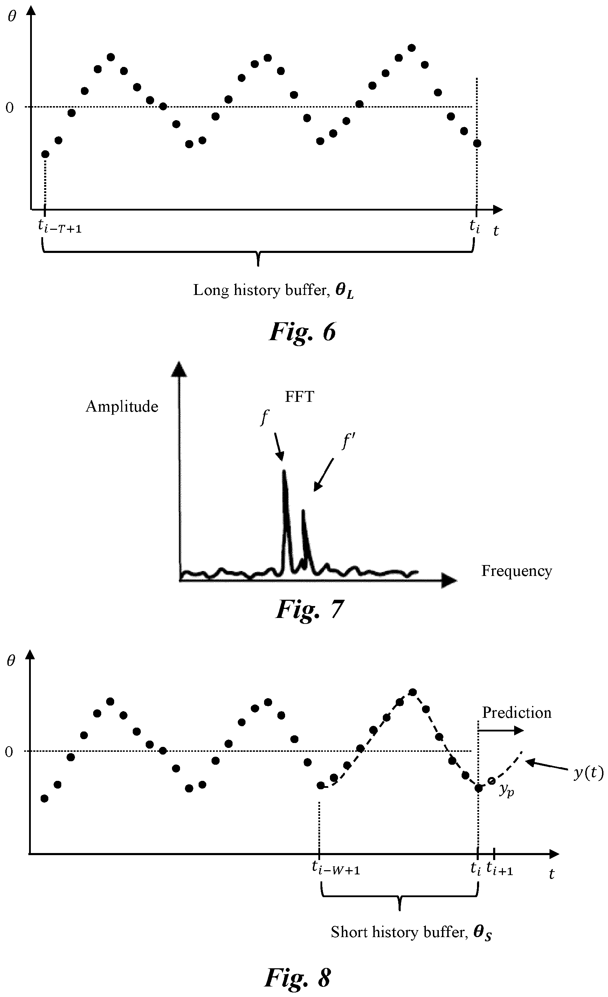

Figs. 6 and 8 show, respectively, a diagrammatic depiction of a first and second time-series of samples $\theta_L$ and $\theta_S$, respectively, that may be stored in the long and short history buffers 210, 214 at a given time instant $t = t_i$. The length of the first time-series $\theta_L$ and the long history buffer 210 is $T$ samples. The length of second time-series and $\theta_S$ and the short history buffer 214 is $W$ samples. The first time-series $\theta_L$ spans a longer time period of the motion signal $\omega$ and samples $\theta$ than the second time-series $\theta_S$. Thus, the first time-series $\theta_L$ forms a long term history of samples $\theta$ while the second time-series $\theta_S$ forms a short term history of samples $\theta$.

The first time-series $\theta_L$ may for example span a time period of at least 0.5 s of the motion signal $\omega$, such as about 1-2 s. The first time-series $\theta_L$ may thus span a time period of the motion signal $\omega$ suitable for enabling a reliable estimation of its current dominant frequency (discussed below). For example, assuming a frequency of the motion signal $\omega$ of at least a few Hz, the first time-series $\theta_L$ may thus span a number, typically a plurality, of periods of the motion signal $\omega$, to facilitate a

8

precise frequency estimate. The second time-series $\theta_S$ may for example span a shorter time period of the motion signal $\omega$, such as 100 ms or less, 50 ms or less, 25 ms or less, or even 10 ms or less, e.g., depending on the expected range of motion frequencies to be compensated for and/or the amount of memory available for the short history buffer 214.

For the above assumed frequency range of the motion signal $\omega$, the second time-series $\theta_S$ may thus span a smaller number of periods, such as a single period, or only a fraction of a period, of the motion signal $\omega$. In Fig. 8, the second time-series $\theta_S$ spans by way of example about half a period of the motion signal $\omega$ (which has a same fundamental frequency as the corresponding time-series of orientation samples $\theta$). A benefit of a shorter second time-series $\theta_S$ is that the sampling rate may be relatively high for the most recent portion of the motion signal $\omega$, thus facilitating a precise regression and prediction (discussed below), while limiting the total amount of data to process and store. A further benefit of a relatively short second time-series $\theta_S$ is that the regression and prediction may respond more quickly to transient changes in the motion signal $\omega$.

In Figs. 6 and 8, the first and second time-series $\theta_L$ and $\theta_S$ are shown to be sampled with equal sampling rates. However, the samples of the first time-series $\theta_L$ may more generally be obtained at a first sampling rate and the samples of the second time-series $\theta_S$ may be obtained at a second sampling rate. The first and second sampling rate may for example each lie in a range from 0.1 to 10 kHz. This allows the first and second time-series $\theta_L$, $\theta_S$ to capture long term and short term characteristics, respectively, of a motion signal $\omega$ caused by vibrational frequencies that may occur in a wide range of typical image capturing scenarios. The first and the second sampling rates may be equal or different sampling rates. The first sampling rate may be lower than the second sampling rate. As discussed above, and as may be understood also in light of the further discussion below, the regression and prediction of successive samples performed by the prediction system 106 may thereby be based on a more frequently updated set of samples than estimation of the current dominant frequency. A benefit of using a lower sampling rate for the first time-series $\theta_L$ is that it may span a longer time period using fewer samples, hence reducing the amount of data that needs to be stored and processed. For instance, the first and second sampling rates may correspond to lower and higher frequencies, respectively, within the above-mentioned frequency range. As an example, the first sampling rate may be in a range of 0.2 to 1 kHz while the second sampling rate may be in a range of 2 to 8 kHz. It is to be noted that the first and second sampling rates in any case may be lower than the sampling rate of the motion signal $\omega$. For instance, the first and second sampling rates may each be a fraction, e.g., a respective fraction, of the sampling rate of the motion signal $\omega$.

As illustrated in Figs. 6 and 8, the earliest sample $\theta_L(t_{i-T+1})$ of the first time-series $\theta_L$ is earlier than an earliest sample $\theta_S(t_{i-W+1})$ of the second time-series $\theta_S$, at the given time instant $t_i$. As further illustrated, the last respective samples of the first and second time-series $\theta_L(t_i)$ and $\theta_S(t_i)$ may be concurrent samples, i.e. derived from a same sample $\omega_i$ of the motion signal. However, in other scenarios, the last sample of the first time-series may also be an earlier sample than the last sample of the second time-series. In particular, this may occur where the first sampling rate of the first time-series $\theta_L$ is lower than the second sampling rate of the second time-series $\theta_S$.

Each of the long and short history buffers 210, 214 may be implemented as a respective first-in-first-out (FIFO) buffer. Thus, assuming the long history buffer 210 has been filled with a first time-series of samples $\theta_L(t_{i-1})$ at time instant $t_{i-1}$, upon obtaining a new sample $\theta(t_i)$ at time instant $t_i$, the first time-series $\theta_L(t_{i-1})$ may be updated with the new sample $\theta(t_i)$ by discarding an oldest (first) sample $\theta$ of the first time-series $\theta_L(t_{i-1})$ and the new sample $\theta$ may be appended as a newest (last) sample $\theta$ to the remaining samples of the first time-series $\theta_L(t_{i-1})$ to form an updated first time series $\theta_L(t_i)$. This applies correspondingly to updating of a second time-series of samples $\theta_S$ stored in the short history buffer 214.

Returning to Fig. 4, the prediction system 106 proceeds, at step S302, to determine, by frequency analysis block 212, a current dominant frequency $f = f(t_i)$ for the motion signal $\omega$ based on a frequency analysis of the first time-series $\theta_L(t_i)$ stored in the long history buffer 210 at time instant $t_i$. The frequency analysis may for instance comprise applying a frequency domain transform to the first time-series $\theta_L$, such as a Fast Fourier transform (FFT) or other discrete-time Fourier or frequency transform. The current dominant frequency $f$ may be determined as the highest amplitude component of the frequency domain representation (i.e., in the spectrum). An amplitude threshold may be used to filter out components to limit the number of amplitude components to analyze to the amplitude components exceeding the amplitude threshold. This may typically correspond to the fundamental frequency of the motion signal $\omega$. An example of a thus obtained spectrum is shown in Fig. 7, along with an indication of a peak corresponding to a current dominant frequency $f$. The determination may advantageously be conditioned on a predetermined frequency range. That is, the current dominant frequency $f$ may be determined as the highest amplitude component within a predetermined frequency range of the spectrum. Thereby, amplitude peaks at frequencies which, e.g., based on a priori knowledge, may be assumed to not be associated with motion which is to be compensated for by OIS may be disregarded in the analysis. For instance, the frequency range may be limited to frequencies of 50 Hz or less, such as 30 Hz or less. The frequency range may also include a lower bound (e.g., 0.1-1 Hz) to exclude DC- and slower varying components not corresponding to motion frequencies to be compensated for. Once determined, the current dominant frequency $f$ may be stored in an output buffer (not shown) of the frequency analysis block 212, to be used as input to a prediction block 216 further discussed below. As the first time-series $\theta_L$ is sequentially updated with new samples $\theta(t_{i+1})$, $\theta(t_{i+2})$, etc., the frequency analysis block 212 may sequentially determine corresponding updated current dominant frequencies $f(t_{i+1})$, $f(t_{i+2})$, etc., and store the same in its output buffer as the last updated current dominant frequency *f*.

At step S303, the prediction system 106 proceeds to determine a setpoint (e.g., a new/updated/next setpoint) forming the control signal c for the OIS system 104. Determining the setpoint c comprises a number of sub-steps, to be described with further reference to the flow chart of Fig. 5.

The prediction system 106 comprises a prediction block 216. The prediction block 216 implements a regression step S304 and a prediction step S305. At step S304, the prediction block 216 performs a fitting of a model function $y = y(t)$ to the last updated second time-series $\theta_S$ (e.g., the second time-series $\theta_S$ as currently stored in the short history buffer 214). At step S305, the prediction block 216 extrapolates the fitted model function *y* past a last sample of the second time-series to predict a successive sample $\theta'$, e.g., a future or next sample, successive to the last sample $\theta(t_i)$, of the second time-series $\theta_S$.

The regression and prediction steps are schematically depicted in Fig. 8. Thus, as shown, the model function *y* is at the given time instant $t = t_i$ fitted to the second time-series $\theta_S(t_i)$. The fitted model function *y* is then extrapolated to a successive future time instant $t = t_i + \delta$ to determine the successive sample denoted $y_p$ (interchangeably "predicted sample $y_p$"). A convenient choice of future time instant (i.e., given by the prediction horizon $\delta$) may as shown in Fig. 8 be $t = t_i + \delta = t_{i+1} = t_i + \Delta_t$, such that $y_p(t_i) = y(t_{i+1})$. In other words, the predicted sample P may correspond to a predicted successive (i.e., upcoming) sample of the second time-series $\theta_S$, i.e. $\theta_{i+1}$ of $\theta_S(t_{i+1})$. However, other choices of the prediction horizon $\delta$ are also possible. The optimal choice may depend on factors such as the step response of the OIS system 104, the mass of the movable element (e.g., lens 118 or image sensor 122), etc. In general, a too short prediction horizon $\delta$ may cause the OIS system 104 to reach the corresponding setpoint (determined as set out below) before a further predicted sample has been determined by the prediction block 216. This may cause the driver 110 to be dormant until the next predicted sample (e.g., $y_p(t_{i+1})$ becomes available, wherein the prediction may bottle-neck the compensation amount. Conversely, a too long prediction horizon $\delta$ may cause the OIS system 104 to target a setpoint not accurately reflecting the dynamics of the camera vibrations.

The model function *y* is based on a sine and/or cosine function and the current dominant frequency *f*. An example of the model function *y* is:

$$y(t, f) = x_0 + x_1 \cdot \sin(2\pi \cdot f \cdot t) + x_2 \cdot \cos(2\pi \cdot f \cdot t)$$

$$(\text{Eq. 1})$$

where *f* represents the last updated current dominant frequency determined by the frequency analysis block 212 (e.g., as currently stored in the output buffer of the frequency analysis block 212). It will in the following be assumed that an updated current dominant frequency has been determined for time instant $t = t_i$, wherein the current dominant frequency in Eq. 1 is given by $f = f(t_i)$.

After fitting the model function of Eq. 1 to the second time-series $\theta_S$, the successive sample $y_p(t_i) = y(t_{i+1})$ may be determined according to:

$$y_p = x_0 + x_1 \cdot \sin(2\pi \cdot f \cdot (t_i + \delta)) + x_2 \cdot \cos(2\pi \cdot f \cdot (t_i + \delta))$$

$$(\text{Eq. 2})$$

where the prediction horizon $\delta$ for instance may equal $\Delta_t$.

As mentioned above, basing the model function *y* specifically on a sine and/or cosine function, in combination with the current dominant frequency *f*, enables a precise prediction of successive orientation samples with a relatively simple model and small computational complexity. This may be understood considering that shaking of the camera 100 may, for the purpose of OIS, to a reasonably good approximation be modeled as a harmonic oscillator, with an oscillation frequency corresponding to the natural frequency of the camera 100 and the object holding the camera 100 (e.g., a supporting structure to which the camera 100 is mounted, or a user hand-holding the camera 100).

In some scenarios, the vibrational movement may be approximated as a simple harmonic oscillator. In other scenarios, a more accurate approximation of the vibrational motion may be a damped harmonic oscillator. However, by estimating the current dominant frequency *f* from the longer first time-series of samples $\theta_L$, and fitting the model function to the shorter second time-series of samples $\theta_S$, and updating the model fitting as the first and/or second time-series of samples $\theta_L$, $\theta_S$ are updated with new samples, Eq. 1 may be used even in case of time-varying characteristics of the vibrational motion. This since the prediction system 106 continually will be updated to changes in dominant vibrational frequency and/or amplitude of the vibrational motion as time progresses.

The model fitting performed at step S304 may amount to solving a system of equations. The system of equations may be expressed in matrix form by:

$$Ax = b$$

<div align="right">(Eq. 3)</div>

where A is coefficient matrix based on Eq. 1 and given by:

$$A = \begin{bmatrix} 1 & \sin(2\pi \cdot f \cdot t_0) & \cos(2\pi \cdot f \cdot t_0) \\ 1 & \sin(2\pi \cdot f \cdot t_1) & \cos(2\pi \cdot f \cdot t_1) \\ \vdots & \vdots & \vdots \\ 1 & \sin(2\pi \cdot f \cdot t_m) & \cos(2\pi \cdot f \cdot t_m) \end{bmatrix}$$

<div align="right">(Eq. 4)</div>

x is a vector comprising the set of fitting parameters of Eq. 1:

$$x = \begin{bmatrix} x_0 \\ x_1 \\ x_2 \end{bmatrix}$$

<div align="right">(Eq. 5)</div>

and $b$ is a vector comprising the second time-series of samples $\theta_S$:

$$b = \begin{bmatrix} y_0 \\ y_1 \\ \vdots \\ y_m \end{bmatrix}$$

<div align="right">(Eq. 6)</div>

The indices $t_{j=0...m}$ here correspond to the indices of the samples of the second time-series of samples $\theta_S$ in Eq. 6, as currently stored in the short buffer 214. Hence, $m = W - 1$. Hence, the matrix A as defined in Eq. 4 may be used also when the second time-series of samples $\theta_S$ is updated (as long as the length of the second time-series of samples $\theta_S$ is unchanged, see below discussion of a varying a length of the second time-series of samples $\theta_S$). The fitting parameters $x$ may be estimated using linear regression, suitably using a least squares method. An effective approach for finding a least squares solution to Eq. 3 is QR-factorization, where the coefficient matrix A is decomposed into an orthogonal matrix $Q$ and an upper triangular matrix $R$, i.e.,

$$A = QR$$

<div align="right">(Eq. 7)</div>

The fitting parameters x may thus be estimated according to:

$$Rx = Q^T b$$

<div align="right">(Eq. 8)</div>

using backward substitution. The successive sample $y_p(t_i)$ may then be predicted according to Eq. 2 using the estimated fitting parameters $x$ and the current dominant frequency $f$.

A least squares fit of the model function may be determined in an analogous manner using other matrix decomposition algorithms, notably other orthogonal-triangular matrix decompositions such as RQ, QL, or LQ decomposition.

At step S306, the prediction system 106 proceeds to determine the next setpoint c for the given time instant $t_i$ based on the predicted successive sample $y_p(t_i)$ determined by the prediction block 216. The setpoint c is thus derived from the predicted sample $y_p(t_i)$. In the illustrated example, the setpoint c is determined by an angle-to-position block 218. The purpose of the angle-to-position block 218 is to apply an angle-to-position function to transform the prediction $y_p(t_i)$, which

in the present example is given as an angle, into a corresponding position value for the movable element, e.g., the movable lens 118 or the image sensor 122. More specifically, the transform maps the prediction $y_p(t_i)$ (which represents a predicted orientation of the camera 100) to a setpoint c representing a position of the movable element. The specific form of the angle-to-position function may depend on the design of the OIS system 104, the location of the movable element relative the pivot point of the angular displacement indicated by the predicted sample $y_p(t_i)$, the geometric relationship between the sensing axis and the compensation axis, etc. The transform may typically be realized by multiplying the predicted sample $y_p(t_i)$ with a predetermined conversion factor (a constant). Suitable approaches for converting an angular displacement measured by a motion sensor (e.g., a gyro), to a linear position of a movable compensation element as measured by a position sensor (e.g., a Hall sensor), as part of an OIS system, are per se known in the art and may accordingly be implemented by the angle-to-position block 218.

The amount of compensation (i.e., the required translation of the movable element of the OIS system 104) that needs to be applied responsive to a given change in orientation of the camera 100 is further dependent on the focal length of the optical system (e.g., optical system 114) of the camera. In case the optical system has a zoom lens, the transform performed by the angle-to-position block 218 may further take into account a current zoom level $L$ of optical system. The current zoom level $L$ may as shown in Fig. 3 be provided by a zoom level block 220. For a computationally efficient implementation, the angle-to-position block 218 may retrieve a gain value from a predetermined look-up-table (e.g., stored in a memory of the OIS system 104) associating each of a number of zoom level entries with a predetermined gain value. The retrieved gain value may be the predetermined gain value associated with the zoom level entry corresponding to (e.g., closest to) the current zoom level $L$. The angle-to-position block 218 may then multiply the position value (e.g., computed according to Eq. 9) with the retrieved gain value. The result may be output as the next setpoint c to the control system 221 comprising the OIS controller 108.

The setpoint c input to the control system 221 is as shown at block 222 in Fig. 3 summed with the inverted position signal $v$ (the negative of the position signal $v$, i.e., $-v$) output by the position sensor 112 to generate an error e representing the tracking error of the control system 221. More specifically, the error e represents the tracking error in terms of position of the movable element. The error e forms the input to the OIS controller 108, which in response generates the actuation signal u for causing the driver (e.g., the driver 110) to actuate the movable element of the controlled system 224 (e.g., lens 118 or sensor 122). For example, where the OIS controller 108 is a PID controller the actuation signal u may be determined as the sum of the P-, I- and D-components based on the error e. Any other suitable conventional approach for generating an actuation signal u based on an error e in a closed-loop controller may be used.

In the above example, the prediction system 106 performs an angle-to-position transform to determine the setpoint c in terms of a setpoint of a position of the movable element. However, other implementations are also possible. For instance, the angle-to-position block 218 may be replaced by a position-to-angle block in the feedback path of the closed-loop control system 221, transforming the position value $v$ output by the position sensor 112 into a corresponding angle. The error signal e input to the OIS controller 108 will in this case represent the tracking error of the control system 221 in an angular domain. The OIS controller 108 may accordingly implement an angle-to-position transform to generate the actuation signal $u$.

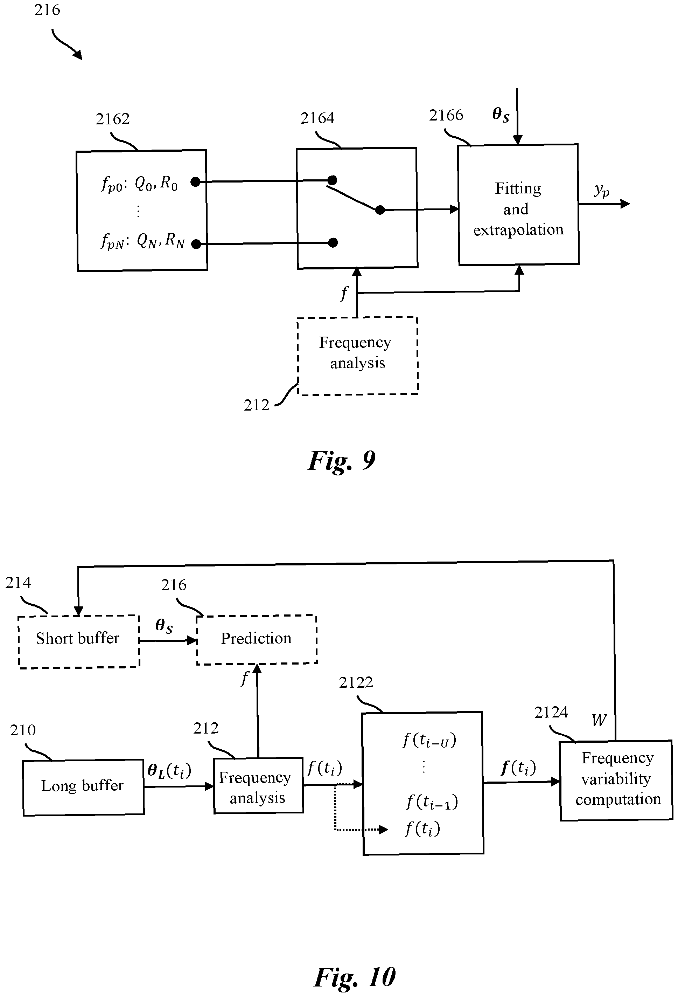

In the above, a regression based on orthogonal-triangular matrix decomposition (e.g., QR-decomposition) is disclosed. The orthogonal (e.g., $Q$) and triangular (e.g., $R$) matrices may thereby be determined during runtime, each time a new current dominant frequency $f$ is made available by the frequency analysis block 212. Fig. 9 is a block diagram of a further implementation of the prediction block 216 of the prediction system 106 of Fig. 3, wherein the regression instead is based on pre-computed orthogonal and triangular matrices. Fig. 9 will be described with reference specifically to QR-decomposition, but an analogous approach may be used for other types of orthogonal-triangular matrix decompositions such as RQ, QL or LQ decomposition.

The prediction block 216 comprises a look-up table 2162 storing a plurality of QR matrix pairs $Q_0, R_0; ... ; Q_N, R_N$. Each QR matrix pair is pre-computed for a model function based on a sine and/or cosine function and a respective frequency $f_{p0},...,f_{pN}$. More specifically, each QR matrix pair may correspond to the QR decomposition of the coefficient matrix $A$ of Eq. 4 determined for a respective value of the frequency $f$. For example, $Q_0, R_0$ may be the QR-decomposition of the coefficient matrix A computed for frequency $f_{p0}$, $Q_1, R_1$ may be the QR-decomposition of the coefficient matrix A computed for frequency $f_{p1}$, and so on for each QR matrix pair up to and including $Q_N, R_N$. Regardless of the specific form of the coefficient matrix, each matrix pair may thus be pre-computed for and associated with a respective (dominant) frequency. The respective frequencies $f_{p0},...,f_{pN}$ may be distributed in a predetermined frequency range. The frequency range may span a range of frequencies which may be expected to occur in typical image capturing scenarios, and which the OIS system 104 is capable to compensate for. The frequency range may for instance be the same frequency range as discussed above with reference to the frequency analysis block 212 and Fig. 7 (e.g., 50 Hz or less, or 30 Hz or less). The number of frequencies may depend on available memory for the look-up table 2162, the desired precision of the regression, etc.

The prediction block 216 further comprises a selector block 2164. The selector block 2164 performs a selection of a QR matrix pair among the plurality of QR matrix pairs $Q_0, R_0; ... ; Q_N, R_N$ based on an input of the current dominant frequency $f$ (e.g., at time instant $t = t_i$ given by $f = f(t_i)$) determined by the frequency analysis block 212. More specifically, the selector block 2164 selects the QR matrix pair among the plurality of QR matrix pairs $Q_0$, $R_0$; ... ; $Q_N$, $R_N$ computed for the frequency $f_{p0},...,f_{pN}$ closest to the determined current dominant frequency $f$.

The selected QR matrix pair is received as input by the fitting and extrapolation block 2166 which, by using the selected QR matrix pair, in response estimates the fitting parameters x from Eq. 8. The fitting and extrapolation block 2166 subsequently determines predicts the successive sample $y_p(t_i)$ according to Eq. 2 using the estimated fitting parameters $x$ and the current dominant frequency $f$.

Fig. 10 is a block diagram of a further implementation of the prediction system 106 of Fig. 3. As mentioned above, the current dominant frequency $f$ determined at each given time instant $t_i$ may be stored in an output buffer of the frequency analysis block 212. In Fig. 10 such an output buffer is represented by block 2122. The output buffer 2122 stores a history, i.e., a time-series, of previously determined current dominant frequencies $f$ determined at respective time instants. In Fig. 10, the length of the output buffer 2122 is U, meaning that the output buffer 2122 maintains a history of U previously determined current dominant frequencies $f$.

The output buffer block 2122 may be implemented as a FIFO buffer. Thus, assuming the output buffer 2122 has been filled with a time-series $f(t_{i-1})$ of $U$ previously determined current dominant frequencies $f$, at time instant $t_{i-1}$, upon obtaining a new current dominant frequency $f(t_i)$ at time instant $t_i$, the time-series $f(t_{i-1})$ may be updated with the new frequency $f(t_i)$ by discarding an oldest (first) frequency $f(t_i - U)$ and the new frequency $f(t_i)$ may be appended as a newest (last) frequency $f(t_i)$ to the remaining frequencies of the time-series $f(t_{i-1})$ to form an updated time series $f(t_i)$ of current domain frequencies.

The (updated) time series $f(t_i)$ of current domain frequencies is received as input by frequency variability computation block 2124 that determines a variability of the time series $f(t_i)$. The variability may for instance be computed as a variance of the time series $f(t_i)$. Based on the determined variability, the frequency variability computation block 2124 adapts a length $W$ of the short history buffer 214 by setting the length $W$ to a smaller value smaller responsive to a higher variability and a greater value to a lower variability.

As mentioned above, the regression may thus be based on a shorter second time series $\theta_S$ responsive to a higher variability than responsive to a lower variability. The benefit of this may be understood considering that a lower variability of the dominant vibrational frequency may imply that the motion signal varies in a more stable manner over time. Thus, a longer second time-series $\theta_S$ may be used to improve the accuracy of the model fitting. Conversely, when the dominant vibrational frequency in the motion signal is less stable, a shorter second time-series $\theta_S$ may imply more transient behavior in the motion signal $\omega$, i.e., the motion signal $\omega$ being less stable over time. Thus, a shorter time-series $\theta_S$ may be used to allow the regression to adapt more quickly to such changes. The frequency variability computation block 2124 may for example compare the variability (e.g.., variance) to a variability threshold and set the length $W$ to a first value responsive to the variability being smaller than (or equal to) the threshold and to a second value higher than the first value responsive to the variability being greater than the threshold. The first and second values may be predetermined values, e.g., determined by testing the performance of the OIS compensation for different lengths of the second time series $\theta_S$ for different amounts of frequency variability. As another example, the frequency variability computation block 2124 may determine the length $W$ in a plurality of steps (e.g., three, four or more steps) as an increasing function of the frequency variability. The length of the second time-series $\theta_S$ may thus be varied in a more gradual manner in dependence on the frequency variability.

In any case, subsequent to determining to decrease the length $W$ of the second time-series $\theta_S$, the second time-series $\theta_S$ may be updated by discarding a number of earliest samples $\theta$ from the second time-series $\theta_S$ to obtain an updated second time-series of the updated decreased length $W$. For instance, assuming the length $W$ is decreased by $\Delta_W$ at time instant $t = t_i$, the samples $\theta(t_{i-W+1})$ to $\theta(t_{i-W+1+\Delta_W-1})$ of the second time-series $\theta_S$ may be discarded, where $\Delta_W$ represents the decrease of the length $W$. Conversely, subsequent to determining to increase the length $W$ of the second time-series $\theta_S$, the second time-series $\theta_S$ may be updated by sequentially appending a number of new samples $\theta$ derived from the motion signal $\omega$ to the second time-series $\theta_S$ to obtain an updated second time-series $\theta_S$ of the updated increased length $W$. For instance, assuming the length $W$ is increased by $\Delta_W$ at time instant $t = t_i$, second time-series $\theta_S$ may be updated with the next samples $\theta(t_{i+1})$ to $\theta(t_{i+\Delta_W})$.

The implementation of the prediction system 106 shown in Fig. 10 may be combined with the implementation of the prediction block 216 discussed with reference to Fig. 9. In this case, the look-up table 2162 may be modified to store a plurality of QR matrix pairs $Q_0$, $R_0$; ... ; $Q_N$, $R_N$ (or other types of orthogonal and triangular matrix pairs such as RQ, QL or LQ matrix pairs) for each of a number of respective lengths $W$ of the second time-series $\theta_S$. That is, the number of rows of the $Q$ and $R$ matrices of a QR matrix pair associated with a respective length $W$ may be $W$. Accordingly, the selector block 2164 may further receive the length $W$ as input from the frequency variability computation block 2124, and select the QR matrix pair from the plurality of QR matrix pairs associated with the length $W$, and further associated with the frequency closest to the determined current dominant frequency $f$. For example, the look-up table 2162 may store a first plurality of QR matrix pairs for a first value of $W$ and a second plurality of QR matrix pairs for a second value of $W$. The selector block 2164 may perform the selection of the QR matrix pair among the first plurality of QR matrix pairs responsive to the input length $W$ being equal to the first value, and among the second plurality of QR matrix pairs responsive to the input length $W$ being equal to the second value.

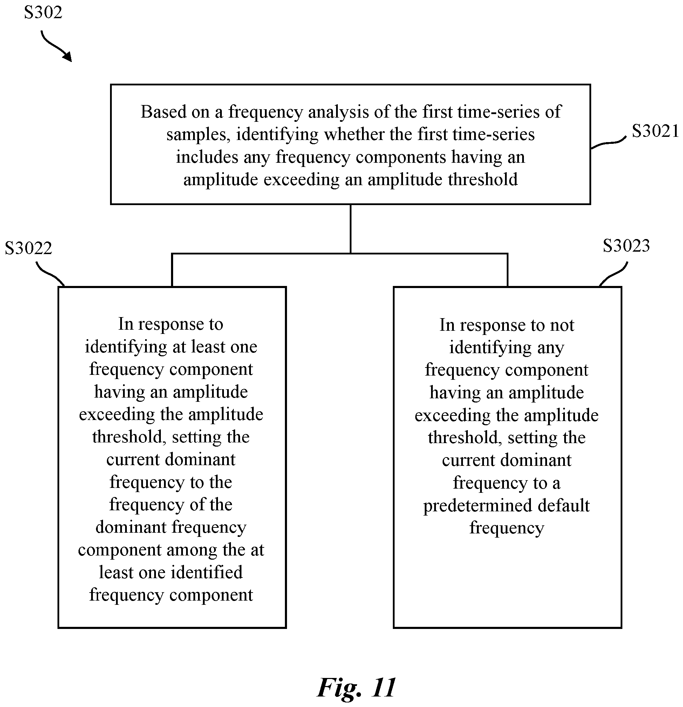

Referring again to Fig. 3 and Fig. 4, it is envisaged that under some scenarios, there may be no clearly distinguishable frequency components in the first time-series of samples $\theta_L$, such that the frequency analysis block 212 at step S302 may not be able to identify a current dominant frequency $f$. To handle such a case, the prediction system 106 may implement following variation of step S302 shown in the flow chart of Fig. 11.

At step S3021, the frequency analysis block 212 performs a frequency analysis of the first time-series of samples $\theta_L$ to identify whether the first time-series $\theta_L$ includes any frequency components having an amplitude exceeding an amplitude threshold A. The frequency analysis may as discussed above comprise applying a frequency domain transform (e.g., an FFT) to the first time-series $\theta_L$ to obtain a spectrum as shown in Fig. 7.

In response to identifying one such frequency component, the frequency analysis block 212 proceeds to, at step S3022, determine the current dominant frequency as the frequency of the thus identified frequency component, i.e., $f = f_1$, where $f_1$ is the frequency of the identified frequency component. Where at least two such frequency component is identified, the frequency analysis block 212 may determine the current dominant frequency as the frequency of the dominant (i.e., highest amplitude) frequency component among the identified at least two frequency components, i.e., $f = f_n$, where $f_n$ is the frequency of the dominant frequency component.

In response to not being able to identify any such frequency components, the frequency analysis block 212 determines, at step S3023, the current domain frequency as a default frequency, i.e., $f = f_D$.

The amplitude threshold A may be determined by investigating spectrums obtained for various vibrational motions of the camera 100 and determining a threshold level above which stable amplitude peaks within the frequency range of interest may be identified under a suitably broad range of scenarios. The default frequency may be predetermined as a frequency which, e.g., based on a priori knowledge of one or more target usage scenarios of the camera 100, may be expected to provide some degree of OIS compensation. For example, a choice which has proven useful under a relatively broad range of scenarios where the camera 100 is mounted to a supporting building structure, is a default frequency in a range from 5 Hz to 20 Hz, for instance 10 Hz.

The various operations and blocks involved in controlling an OIS system discussed herein, such as the OIS system 104, may be implemented in both hardware and software. In a software implementation, the image capturing device, e.g. the camera 100, may comprise a processing device realized in the form of one or more processors, such as one or more central processing units, which in association with computer program code instructions stored on a (non-transitory) computer-readable medium, such as a non-volatile memory, causes the processing device to carry out the method steps for controlling the OIS system. Examples of non-volatile memory include read-only memory, flash memory, ferroelectric RAM, magnetic computer storage devices, optical discs, and the like. In a hardware implementation, the processing device may instead be realized by dedicated circuitry configured to implement the method steps for controlling the OIS system. The circuitry may be in the form of one or more integrated circuits, such as one or more application specific integrated circuits (ASICs) or one or more field-programmable gate arrays (FGPAs). It is to be understood that it is also possible to have a combination of a hardware and a software implementation, meaning that some method steps may be implemented in dedicated circuitry and others in software.

The person skilled in the art realizes that the present invention by no means is limited to the examples described above. On the contrary, many modifications and variations are possible within the scope of the appended claims.

For instance, while the model function $y$ of Eq. 1 is based on both a sine and a cosine function, it is also possible to define an equivalent model function based on either a sine or a cosine function. In this case, the frequency term $2\pi \cdot f \cdot t$ of the sine or cosine function may be supplemented with a phase shift.

Furthermore, while in the above, reference has mainly been made to determining a single dominant frequency for the motion signal. However, it is possible for the frequency analysis block 212 of Fig. 3 to determine more than one dominant frequency. For instance, as indicated in Fig. 7, the frequency analysis block 212 may in addition to a "first" dominant frequency $f$ determine a "second" dominant frequency $f'$, the first and second dominant frequencies $f, f'$ being the two highest amplitude components of the frequency domain representation. The model function $y$ of Eq. 1 may accordingly be modified to include additional terms for the second dominant frequency $f'$, e.g.,

$$y(t, f) = x_0 + x_1 \cdot \sin(2\pi \cdot f \cdot t) + x_2 \cdot \cos(2\pi \cdot f \cdot t) + x_3 \cdot \sin(2\pi \cdot f' \cdot t) + x_4 \cdot \cos(2\pi \cdot f' \cdot t)$$

$$\text{(Eq. 1')}$$

This may entail a corresponding modification of Eq. 2 and Eq. 4 (e.g., introducing two further columns and two further rows corresponding to the further fitting parameters $x_3$ and $x_4$). This approach may be extended to determine three or more dominant frequencies. While access to a greater number of dominant frequencies may enable a more precise prediction of a successive sample, it may introduce additional computational complexity both in the frequency analysis and during regression. Hence, the number of dominant frequencies may generally be a trade-off between precision and computational complexity. It is contemplated that in a typical implementation, a single or two dominant frequencies may strike a good balance between precision and computational complexity.

Furthermore, the discussion with reference to the figures mainly has been made with reference to a single sensing axis of a motion sensor 202 implemented by a gyro (e.g. pitch or yaw), and a single corresponding compensation axis of the OIS system 104. However, the above discussion may be applied in a corresponding manner also to any of the other above-mentioned implementations of the motion sensor 102, and further to any number of sensing and compensation axes. For instance, the implementations and examples described above with reference to the OIS system 104 of Fig. 3, may be performed for each sensing axis of a motion sensor (e.g., both axes of a 2-axis gyro) and each corresponding compensation axis of an OIS system (e.g., a translation of a movable lens along two transverse axes in a plane transverse to an optical axis of the optical system 114). For instance, at step S301 of the method 300 of Fig. 4, a respective first and second time-series of samples may be derived from each sensing axis of the motion signal (e.g., pitch and yaw). Correspondingly, step S302 may be applied individually to each respective first time-series, to determine a current dominant frequency for each sensing axis of the motion signal. Further, step S303 may comprise determining a respective per-axis setpoint for each of the corresponding compensation axes. Each per-axis setpoint may be determined by performing each of steps S304-306 individually for each sensing axis. That is, a respective model function based on a sine and/or cosine function and the current dominant frequency determined for the respective first time-series, may be fitted to the respective second time-series, and a successive sample may be predicted by extrapolating the respective fitted model function. The per-axis setpoint may then be determined based on the respective successive sample. As may be appreciated, the OIS system 104 may in this case include a respective driver 110 and a respective position sensor 112 for each compensation axis.

**Claims**

1. A method for controlling an optical image stabilization, OIS, system (104) of an image capturing device (100), the method comprising:

    obtaining (S301) a first and a second time-series of samples derived from a motion signal of a motion sensor (102, 202) of the image capturing device (100), wherein the motion signal indicates a motion of the image capturing device (100), and wherein the first time-series spans a longer time period of the motion signal than the second time-series;
    determining (S302) a current dominant frequency for the motion signal based on a frequency analysis of the first time-series; and
    determining (S303) a setpoint for the OIS system (104) by:

        fitting (S304) to the second time-series a model function based on a sine and/or cosine function and the current dominant frequency,
        extrapolating (S305) the fitted model function past a last sample of the second time-series to predict a successive sample, and
        determining (S306) the setpoint based on the predicted successive sample.

2. The method of claim 1, wherein an earliest sample of the first time-series is earlier than an earliest sample of the second time-series and a last sample of the first time-series is concurrent with or earlier than the last sample of the second time-series.

3. The method according to any one of the preceding claims, wherein the motion signal indicates a rotational motion.

4. The method according to claim 3, wherein the motion signal indicates an angular rate and the samples are derived by integrating the motion signal.

5. The method according to any one of claims 3-4, wherein the motion sensor comprises a gyro.

6. The method according to any one of the preceding claims, wherein fitting the model function to the second time-series comprises determining a least squares fit of the model function to the second time-series using orthogonal-triangular matrix decomposition, wherein determining the least squares fit comprises: selecting an orthogonal and a triangular matrix pair from a plurality of orthogonal and triangular matrix pairs, each pair pre-computed for a model function based on a sine and/or cosine function and a respective frequency, wherein the selected orthogonal and triangular matrix pair is the pair among the plurality of orthogonal and triangular matrix pairs computed for the frequency closest to the determined current dominant frequency.

7. The method according to claim 6, wherein the orthogonal-triangular matrix decomposition is QR, RQ, QL, or LQ decomposition.

8. The method according to any one of the preceding claims, further comprising:

sequentially updating the second time-series with new samples derived from of the motion signal; and
sequentially determining updated setpoints for the OIS system, wherein each updated setpoint is determined by:

fitting to the last updated second time-series a model function based on a sine and/or cosine function and a current dominant frequency,
extrapolating the fitted model function past the last sample or the last updated second time-series to predict an updated successive sample, and
determining the updated setpoint based on the predicted updated successive sample.

9. The method according to claim 8, further comprising:

sequentially updating the first time-series with new samples derived from of the motion signal; and
sequentially determining an updated current dominant frequency based on the last updated first time-series of samples;
wherein the respective model function used to predict each respective updated upcoming sample is based on the last updated current dominant frequency.

10. The method according to claim 9, further comprising determining a variability of a sequence of determined current dominant frequencies, wherein a length of a subsequently updated second time series is based on the variability such that the length is smaller responsive to a higher variability than responsive to a lower variability.

11. The method according to any one of claims 9-10, wherein the first and second time-series are updated at a first and a second sampling rate, respectively, wherein the first sampling rate is lower than or equal to the second sampling rate.

12. The method according to any one of the preceding claims, wherein determining the current dominant frequency comprises:

based on a frequency analysis of the first time-series of samples, identifying whether the first time-series includes any frequency components having an amplitude exceeding an amplitude threshold;
in response to identifying at least one frequency component having an amplitude exceeding the amplitude threshold, setting the current dominant frequency to the frequency of the dominant frequency component among the at least one identified frequency component,
in response to not identifying any frequency component having an amplitude exceeding the amplitude threshold, setting the current dominant frequency to a predetermined default frequency.

13. The method according to any one of the preceding claims, wherein the OIS system (104, 104') is configured to compensate for motion of the image capturing device (100) by controlling a position of a movable element (118, 122) of the OIS system (104, 104') based on the setpoint, and wherein determining the setpoint for the OIS system (104, 104') comprises applying a transform (218) to the successive sample to map the successive sample to a setpoint representing a position of the movable element (118, 122).

14. An image capturing device (100) comprising:

a motion sensor (102) configured to output an orientation signal indicating an instantaneous motion of the image capturing device (100);
an optical image stabilization, OIS, system (104) configured to compensate for motion of the image capturing device (100); and
a processing device configured to perform the method of any one of claims 1-13 for controlling the OIS system (104).

15. A computer program product comprising computer program code portions configured to perform the method of any one of claims 1-13, when executed by a processing device.

**Amended claims in accordance with Rule 137(2) EPC.**

1. A method for controlling an optical image stabilization, OIS, system (104, 104') of an image capturing device (100), the method comprising:

   obtaining (S301) a first and a second time-series of samples derived from a motion signal of a motion sensor (102, 202) of the image capturing device (100), wherein the motion signal indicates a motion of the image capturing device (100), wherein the first time-series spans a longer time period of the motion signal than the second time-series, and wherein an earliest sample of the first time-series is earlier than an earliest sample of the second time-series and a last sample of the first time-series is concurrent with or earlier than a last sample of the second time-series;

   determining (S302) a current dominant frequency for the motion signal based on a frequency analysis of the first time-series; and

   determining (S303) a setpoint for the OIS system (104) by:

   fitting (S304) to the second time-series a model function based on a sine and/or cosine function and the current dominant frequency,

   extrapolating (S305) the fitted model function past the last sample of the second time-series to predict a successive sample, and

   determining (S306) the setpoint based on the predicted successive sample.

2. The method according to claim 1, wherein the motion signal indicates a rotational motion.

3. The method according to claim 2, wherein the motion signal indicates an angular rate and the samples are derived by integrating the motion signal.

4. The method according to any one of claims 2-3, wherein the motion sensor comprises a gyro (202).

5. The method according to any one of the preceding claims, wherein fitting the model function to the second time-series comprises determining a least squares fit of the model function to the second time-series using orthogonal-triangular matrix decomposition, wherein determining the least squares fit comprises: selecting an orthogonal and a triangular matrix pair from a plurality of orthogonal and triangular matrix pairs, each pair pre-computed for a model function based on a sine and/or cosine function and a respective frequency, wherein the selected orthogonal and triangular matrix pair is the pair among the plurality of orthogonal and triangular matrix pairs computed for the frequency closest to the determined current dominant frequency.

6. The method according to claim 5, wherein the orthogonal-triangular matrix decomposition is QR, RQ, QL, or LQ decomposition.

7. The method according to any one of the preceding claims, further comprising:

   sequentially updating the second time-series with new samples derived from of the motion signal; and

   sequentially determining updated setpoints for the OIS system (104, 104'), wherein each updated setpoint is determined by:

   fitting to the last updated second time-series a model function based on a sine and/or cosine function and a current dominant frequency,

   extrapolating the fitted model function past the last sample or the last updated second time-series to predict an updated successive sample, and

   determining the updated setpoint based on the predicted updated successive sample.

8. The method according to claim 7, further comprising:

   sequentially updating the first time-series with new samples derived from of the motion signal; and

   sequentially determining an updated current dominant frequency based on the last updated first time-series of samples;
wherein the respective model function used to predict each respective updated upcoming sample is based on the last updated current dominant frequency.

9. The method according to claim 8, further comprising determining a variability of a sequence of determined current dominant frequencies, wherein a length of a subsequently updated second time series is based on the variability such that the length is smaller responsive to a higher variability than responsive to a lower variability.

10. The method according to any one of claims 8-9, wherein the first and second time-series are updated at a first and a second sampling rate, respectively, wherein the first sampling rate is lower than or equal to the second sampling rate.

11. The method according to any one of the preceding claims, wherein determining the current dominant frequency comprises:

based on a frequency analysis of the first time-series of samples, identifying (S3021) whether the first time-series includes any frequency components having an amplitude exceeding an amplitude threshold;
in response to identifying at least one frequency component having an amplitude exceeding the amplitude threshold, setting (S3022) the current dominant frequency to the frequency of the dominant frequency component among the at least one identified frequency component,
in response to not identifying any frequency component having an amplitude exceeding the amplitude threshold, setting (S3023) the current dominant frequency to a predetermined default frequency.

12. The method according to any one of the preceding claims, wherein the OIS system (104, 104') is configured to compensate for motion of the image capturing device (100) by controlling a position of a movable element (118, 122) of the OIS system (104, 104') based on the setpoint, and wherein determining the setpoint for the OIS system (104, 104') comprises applying a transform (218) to the successive sample to map the successive sample to a setpoint representing a position of the movable element (118, 122).

13. An image capturing device (100) comprising:

a motion sensor (102, 202) configured to output an orientation signal indicating an instantaneous motion of the image capturing device (100);
an optical image stabilization, OIS, system (104, 104') configured to compensate for motion of the image capturing device (100); and
a processing device configured to perform the method of any one of claims 1-12 for controlling the OIS system (104).

14. A computer program product comprising computer program code portions configured to perform the method of any one of claims 1-12, when executed by a processing device.

100

102        106        108        104

| Motion sensor | $m$ → | Prediction system | $c$ → | OIS controller |

110 — Driver ← $u$

114    Pos. sensor — 112    $v$

116    118    120

Image sensor    F

122

**Fig. 1**

100

102　　　　　　　　106　　　　　　　108　　　　　　　104'

| Motion sensor | $m$ → | Prediction system | $c$ → | OIS controller |

$u$ ↓　　　↑ $v$

110　　　　　　　112

| Driver |　　| Pos. sensor | F

114

| Image sensor |

116　118　120　　　　　　122

*Fig. 2*

*Fig. 3*

300

| Obtaining a first and a second time-series of samples derived from a motion signal of a motion sensor of the image capturing device | S301 |

| Determining a current dominant frequency for the motion signal based on a frequency analysis of the first time-series | S302 |

| Determining a setpoint for the OIS system | S303 |

*Fig. 4*

S303

| Fitting to the second time-series a model function based on a sine and/or cosine function and the current dominant frequency | S304 |

| Extrapolating the fitted model function past a last sample of the second time-series to predict a successive sample | S305 |

| Determining the setpoint based on the predicted successive sample | S306 |

*Fig. 5*

$\theta$

$0$

$t_{i-T+1}$     $t_i$   $t$

Long history buffer, $\boldsymbol{\theta}_L$

*Fig. 6*

Amplitude

FFT

$f$

$f'$

Frequency

*Fig. 7*

$\theta$

$0$

Prediction

$y(t)$

$y_p$

$t_{i-W+1}$     $t_i$ $t_{i+1}$   $t$

Short history buffer, $\boldsymbol{\theta}_S$

*Fig. 8*

216

$$f_{p0}: Q_0, R_0$$
$$\vdots$$
$$f_{pN}: Q_N, R_N$$

2162

2164

2166  $\boldsymbol{\theta}_S$

Fitting
and
extrapolation

$y_p$

$f$

Frequency
analysis

212

**Fig. 9**

214

216

Short buffer  $\boldsymbol{\theta}_S$  Prediction

$f$

210

212

2122

2124  $W$

Long buffer  $\boldsymbol{\theta}_L(t_i)$  Frequency
analysis  $f(t_i)$

$f(t_{i-U})$
$\vdots$
$f(t_{i-1})$
$f(t_i)$

$\boldsymbol{f}(t_i)$  Frequency
variability
computation

**Fig. 10**

S302

Based on a frequency analysis of the first time-series of samples, identifying whether the first time-series includes any frequency components having an amplitude exceeding an amplitude threshold — S3021

S3022

In response to identifying at least one frequency component having an amplitude exceeding the amplitude threshold, setting the current dominant frequency to the frequency of the dominant frequency component among the at least one identified frequency component

S3023

In response to not identifying any frequency component having an amplitude exceeding the amplitude threshold, setting the current dominant frequency to a predetermined default frequency

*Fig. 11*

| | Europäisches Patentamt European Patent Office Office européen des brevets | **EUROPEAN SEARCH REPORT** | **Application Number** EP 24 21 9275 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU CHANG ET AL: "HyperOIS: A Comprehensive Optical Image Stabilization Solution for Modern Smartphones", IEEE TRANSACTIONS ON CONSUMER ELECTRONICS, IEEE SERVICE CENTER, NEW YORK, NY, US, vol. 70, no. 1, 22 February 2024 (2024-02-22), pages 696-703, XP011968574, ISSN: 0098-3063, DOI: 10.1109/TCE.2024.3369029 [retrieved on 2024-02-22] * abstract * * figures 3, 4 * * sec. III; page 697 - page 699 * | 1-15 | INV. H04N23/68 G02B27/64 |
| A | US 2009/174782 A1 (KAHN PHILIPPE [US] ET AL) 9 July 2009 (2009-07-09) * abstract * * figure 6B * * paragraph [0022] - paragraph [0023] * * paragraph [0060] - paragraph [0069] * * paragraph [0080] * | 1-15 | |
| A | EP 3 449 624 B1 (GOPRO INC [US]) 27 May 2020 (2020-05-27) * abstract * * figures 3, 5 * * paragraph [0022] - paragraph [0025] * | 1-15 | TECHNICAL FIELDS SEARCHED (IPC) H04N G02B |

-/--

The present search report has been drawn up for all claims

| Place of search | Date of completion of the search | Examiner |
|---|---|---|
| Munich | 30 April 2025 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt

European
Patent Office

Office européen
des brevets

# EUROPEAN SEARCH REPORT

**Application Number**

EP 24 21 9275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG YONGLIANG ET AL: "Vibration Signal Extraction Based on FFT and Least Square Method", IEEE ACCESS, IEEE, USA, vol. 8, 14 December 2020 (2020-12-14), pages 224092-224107, XP011827782, DOI: 10.1109/ACCESS.2020.3044149 [retrieved on 2020-12-24] * abstract * * sec. II - III; page 224093 - page 224100 * | 1-15 | |

TECHNICAL FIELDS
SEARCHED (IPC)

The present search report has been drawn up for all claims

| Place of search | Date of completion of the search | Examiner |
|---|---|---|
| Munich | 30 April 2025 | Furlan, Silvano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9275

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | | Publication date | Patent family member(s) | | Publication date |
|---|---|---|---|---|---|
| US 2009174782 | A1 | 09-07-2009 | EP | 2238506 A1 | 13-10-2010 |
| | | | JP | 5314049 B2 | 16-10-2013 |
| | | | JP | 2011509058 A | 17-03-2011 |
| | | | US | 2009174782 A1 | 09-07-2009 |
| | | | WO | 2009089220 A1 | 16-07-2009 |
| EP 3449624 | B1 | 27-05-2020 | CN | 109314748 A | 05-02-2019 |
| | | | EP | 3449624 A1 | 06-03-2019 |
| | | | US | 9756249 B1 | 05-09-2017 |
| | | | US | 2018048821 A1 | 15-02-2018 |
| | | | US | 2019109990 A1 | 11-04-2019 |
| | | | US | 2020092481 A1 | 19-03-2020 |
| | | | WO | 2017189125 A1 | 02-11-2017 |

EPO FORM P0459

For more details about this annex : see Official Journal of the European Patent Office, No. 12/82